# EUROPÄISCHE PATENTANMELDUNG

(11) **EP 3 611 832 A1**
(43) Veröffentlichungstag der Anmeldung: **19.02.2020**
(21) Anmeldenummer: 18206383.4
(22) Anmeldetag: 15.11.2018
(51) Int. Cl.: H02M 1/36, H02J 3/38, H02J 9/06, H02J 7/35, H02M 1/00

(54) **PHOTOVOLTAIK-WECHSELRICHTER UND VERFAHREN ZUM BETREIBEN EINES SOLCHEN PHOTOVOLTAIK-WECHSELRICHTERS**

(30) Priorität: 13.08.2018 AT 506892018
(71) Anmelder: FRONIUS INTERNATIONAL GmbH, 4643 Pettenbach (AT)
(72) Erfinder: OVERBECK, Ruben, 4600 Wels (AT); WALLISCH, Gerhard, 1100 Wien (AT)
(74) Vertreter: Sonn & Partner Patentanwälte

(57) **Zusammenfassung**

Die Erfindung betrifft einen Photovoltaik-Wechselrichter (2) mit einem DC-Eingang (3) zur Verbindung mit einer DC-Quelle (4), einem DC-DC-Wandler (9), einem Zwischenkreis (10), einem DC-AC-Wandler (11), einem AC-Trenner (8), einem AC-Anschluss (5) zur Verbindung mit einem Versorgungsnetz (6) und allenfalls einem Verbraucher (7), einer Batterie-Stufe (16), und einem Batterie-Anschluss (14) zur Verbindung mit einer Pufferbatterie (15) sowie ein Verfahren zum Betreiben eines solchen Photovoltaik-Wechselrichters (2). Erfindungsgemäß ist ein Schaltnetzteil (18) vorgesehen, welches Schaltnetzteil (18) eingangsseitig mit dem AC-Anschluss (5) und ausgangsseitig mit dem Batterie-Anschluss (14) verbunden ist, sodass bei deaktivierter DC-Quelle (4) der Zwischenkreis (10) über das Schaltnetzteil (18) und die Batterie-Stufe (16) auf einen Schwellwert aufladbar ist, worauf der AC-Trenner (8) betätigbar ist.

## Beschreibung

Die Erfindung betrifft einen Photovoltaik-Wechselrichter mit einem DC-Eingang zur Verbindung mit einer DC-Quelle, einem DC-DC-Wandler, einem Zwischenkreis, einem DC-AC-Wandler, einem AC-Trenner, einem AC-Anschluss zur Verbindung mit einem Versorgungsnetz und allenfalls einem Verbraucher, einer Batterie-Stufe, und einem Batterie-Anschluss zur Verbindung mit einer Pufferbatterie.

Die Erfindung betrifft weiters ein Verfahren zum Betreiben eines Photovoltaik-Wechselrichters, wobei der Photovoltaik-Wechselrichter einen DC-Eingang zur Verbindung mit einer DC-Quelle, einen DC-DC-Wandler, einen Zwischenkreis, einen DC-AC-Wandler, einen AC-Trenner, einen AC-Anschluss zur Verbindung mit einem Versorgungsnetz und allenfalls einem Verbraucher, eine Batterie-Stufe, und einen Batterie-Anschluss zur Verbindung mit einer Pufferbatterie aufweist.

Beispielsweise beschreibt die WO 2008/138020 A1 einen derartigen Hybrid-Wechselrichter, der sowohl mit einem Versorgungsnetz verbunden werden kann, als auch als Inselwechselrichter zur Versorgung von Verbrauchern mit elektrischer Energie betrieben werden kann, und ein Verfahren zu dessen Steuerung.

Um einen Wechselrichter mit einem Versorgungsnetz verbinden zu können, muss die Zwischenkreisspannung auf die Netzscheitelspannung angehoben werden, bevor der AC-Trenner geschlossen wird. Dies geschieht dadurch, indem die Spannung der DC-Quelle (Solarmodul oder Pufferbatterie) entsprechend umgewandelt wird. Wenn die Solarmodule oder die Pufferbatterie keine Spannung liefern, ist es allerdings in der Regel nicht möglich, die Zwischenkreisspannung anzuheben.

Eine Möglichkeit besteht in einer speziellen Verschaltung von Filterkondensatoren, sodass diese als Vorschaltkondensatoren zum Laden des Zwischenkreises über den DC-AC-Wandler genutzt werden können. Nachteilig bei dieser Variante ist jedoch, dass sich zusätzliche Ableitströme über die Solarmodule ergeben können. Darüber hinaus ist der Schaltungsaufwand erhöht.

Eine weitere Möglichkeit ist die Verwendung einer separaten Schaltung für das Hochladen der Zwischenkreisspannung ohne DC-Quelle vom Versorgungsnetz. Diese Lösung benötigt jedoch auch Platz auf der Leiterplatte des Wechselrichters und verursacht zusätzliche Kosten.

Aus den genannten Gründen wird bei manchen Photovoltaik-Wechselrichtern auch auf das Hochladen vom Versorgungsnetz beim Fehlen einer DC-Quelle oder Pufferbatterie verzichtet, wodurch allerdings das Energiemanagement des Photovoltaik-Wechselrichters verschlechtert wird.

Die Aufgabe der vorliegenden Erfindung besteht in der Schaffung eines oben genannten Photovoltaik-Wechselrichters und eines Verfahrens zum Betreiben eines solchen Photovoltaik-Wechselrichters, sodass der Photovoltaik-Wechselrichter jederzeit und unabhängig vom Vorhandensein einer Spannung der DC-Quelle gestartet werden kann, beispielsweise während der Dämmerung oder Nachtstunden. Der Schaltungsaufwand und die dafür zusätzlich anfallenden Herstellungskosten sollen möglichst gering sein.

Gelöst wird die erfindungsgemäße Aufgabe durch einen oben genannten Wechselrichter, wobei ein Schaltnetzteil vorgesehen ist, welches Schaltnetzteil eingangsseitig mit dem AC-Anschluss und ausgangsseitig mit dem Batterie-Anschluss verbunden ist, sodass bei deaktivierter DC-Quelle der Zwischenkreis über das Schaltnetzteil und die Batterie-Stufe auf einen Schwellwert aufladbar ist, worauf der AC-Trenner betätigbar ist. Erfindungsgemäß ist also vorgesehen, dass bei deaktivierter bzw. inaktiver DC-Quelle, also wenn die Solarmodule beispielsweise während der Dämmerung oder während der Nachtstunden oder wegen Schnees keine Energie liefern, oder die DC-Quelle vom Photovoltaik-Wechselrichter getrennt ist, der Zwischenkreis über das Schaltnetzteil und die Batterie-Stufe geladen wird, bis die für ein Zuschalten des Photovoltaik-Wechselrichters an das Versorgungsnetz notwendige Spannung am Zwischenkreis erreicht ist. Danach wird der Photovoltaik-Wechselrichter durch Betätigen bzw. Schließen des AC-Trenners an das Versorgungsnetz geschaltet, indem der AC-Trenner geschlossen wird. Danach kann entweder die Pufferbatterie über das Versorgungsnetz geladen werden oder von der Pufferbatterie Energie in das Versorgungsnetz eingespeist werden.

Ebenso kann vom Photovoltaik-Wechselrichter Blindleistung kompensiert werden. Der schaltungstechnische Aufwand ist gering, da die vorhandene Batterie-Stufe auch für diese Funktion genutzt werden kann und keine eigene Hochladeschaltung erforderlich ist, welche entsprechenden Platz auf der Leiterplatte des Photovoltaik-Wechselrichters benötigen würde. Für das spannungsgesteuerte Laden des Zwischenkreises ist daher keine Strommessung notwendig. Ein allenfalls vorhandener Stromsensor für die Messung der höheren Lade-/Entladeströme der Pufferbatterie wäre für diese Zwecke zu ungenau.

Vorteilhafterweise ist ausgangsseitig des Schaltnetzteils eine Diode angeordnet. Diese Diode zwischen dem Schaltnetzteil und der Batterie-Stufe verhindert einen Stromfluss von der Batterie-Stufe zum Schaltnetzteil.

Vorteilhafterweise ist ein Batterie-Schalter zum Zu- und Wegschalten der Pufferbatterie vorgesehen. Durch einen solchen Batterie-Schalter kann die Pufferbatterie nur bei Bedarf zugeschaltet werden, wenn aus dieser Energie zur Versorgung von Verbrauchern entnommen wird oder wenn diese geladen werden soll.

Gemäß einem weiteren Merkmal der Erfindung ist eine Steuervorrichtung vorgesehen, welche sämtliche Komponenten des Photovoltaik-Wechselrichters steuert und aktiviert bzw. deaktiviert.

Die Batterie-Stufe ist vorzugsweise durch einen bidirektionalen DC-DC-Wandler gebildet, insbesondere durch einen Hochsetzsteller mit Synchrongleichrichtung mit zwei Halbleiterschaltern. Ein solcher bidirektionaler DC-DC-Wandler bzw. Hochsetzsteller kann in beide Richtungen betrieben werden, also zum Laden der Pufferbatterie, indem die Zwischenkreisspannung auf die gewünschte Batterieladespannung umgewandelt wird und zum Wandeln der von der Pufferbatterie bereitgestellten Spannung auf die gewünschte Zwischenkreisspannung zum Versorgen der Verbraucher mit elektrischer Energie oder zum Einspeisen von Energie aus der Pufferbatterie in das Versorgungs- bzw. Inselnetz.

Vorteilhafterweise ist die Batterie-Stufe mit der Steuervorrichtung verbunden, welche Steuervorrichtung zur Ladung des Zwischenkreises mit im Wesentlichen konstanter Leistungsentnahme aus dem Schaltnetzteil ausgebildet ist, indem die Halbleiterschalter des Hochsetzstellers mit einem vorgegebenen Tastverhältnis ansteuerbar sind. Um das Schaltnetzteil während des Hochladens der Zwischenkreisspannung nicht zu überlasten, werden die Halbleiterschalter der als Hochsetzsteller ausgebildeten Batterie-Stufe mit einem entsprechenden Tastverhältnis angesteuert, welches sicherstellt, dass die Leistungsentnahme aus dem Schaltnetzteil im Wesentlichen konstant ist.

Die Steuervorrichtung ist mit einem Programmspeicher verbunden, in welchem die jeweilige Vorschrift für die Ansteuerung der Halbleiterschalter der Batterie-Stufe entsprechend hinterlegt ist, um eine Überlastung des Schaltnetzteils verhindern zu können. Dabei können entsprechende Formeln für das Tastverhältnis der Ansteuerung der Halbleiterschalter der Batterie-Stufe oder entsprechende Tabellen im Programmspeicher hinterlegt sein.

Gelöst wird die erfindungsgemäße Aufgabe auch durch ein oben genanntes Verfahren zum Betreiben eines Photovoltaik-Wechselrichters, wobei ein Schaltnetzteil vom AC-Anschluss versorgt wird und bei deaktivierter DC-Quelle zum Laden des Zwischenkreises über die Batterie-Stufe auf einen Schwellwert verwendet wird, worauf der AC-Trenner betätigt wird. Dadurch resultiert ein optimiertes Energiemanagement auch bei deaktivierter DC-Quelle der Photovoltaikanlage, indem der Zwischenkreis über das Schaltnetzteil und die Batterie-Stufe geladen wird, bis ein Zuschalten des Photovoltaik-Wechselrichters an das Versorgungsnetz durch Betätigen bzw. Schließen des AC-Trenners ermöglicht wird. Nach der Zuschaltung des Photovoltaik-Wechselrichters kann die Pufferbatterie über das Versorgungsnetz geladen werden oder von der Pufferbatterie Energie in das Versorgungsnetz eingespeist werden. Ebenso kann vom Photovoltaik-Wechselrichter Blindleistung kompensiert werden. Zu weiteren dadurch erzielbaren Vorteilen wird auf die obige Beschreibung des Photovoltaik-Wechselrichters verwiesen.

Vorzugsweise wird die Pufferbatterie über einen Batterie-Schalter zu- und weggeschaltet.

Gemäß einem weiteren Merkmal der Erfindung wird der Zwischenkreis über das Schaltnetzteil mit konstanter Leistung geladen, indem die Batterie-Stufe durch einen bidirektionalen DC-DC-Wandler, insbesondere einen Hochsetzsteller mit Synchrongleichrichtung mit zwei Halbleiterschaltern gebildet wird, welche Halbleiterschalter über ein entsprechendes Tastverhältnis angesteuert werden. Durch das Laden mit konstanter Leistung wird darauf Rücksicht genommen, dass das Schaltnetzteil nur eine begrenzte Leistung bzw. Spannung zur Verfügung stellen kann. Somit wird eine Überlastung des Schaltnetzteils verhindert.

Vorteilhafterweise wird vor dem Laden des Zwischenkreises über das Schaltnetzteil die Spannung am Zwischenkreis gemessen und als Startspannung herangezogen, und das Tastverhältnis zur Ansteuerung der Halbleiterschalter der Batterie-Stufe in Abhängigkeit der Startspannung ermittelt. Dadurch kann gewährleistet werden, dass das Schaltnetzteil nicht überlastet wird, ohne dass eine Strommessung erforderlich ist.

Vorteilhafterweise erfolgt die Zuschaltung des Photovoltaik-Wechselrichters durch Schließen des AC-Trenners dann, wenn der Schwellwert der Spannung des Zwischenkreises mindestens der Netzscheitelspannung des Versorgungsnetzes entspricht. Bei einem dreiphasigen Wechselrichter entspricht dies der Außenleiterscheitelspannung.

Die Erfindung wird anhand der beigefügten Zeichnungen näher erläutert. Darin zeigen:
- Fig. 1: ein Blockschaltbild einer üblichen Photovoltaik-Anlage;
- Fig. 2: ein Blockschaltbild einer Ausführungsform eines Photovoltaik-Wechselrichters gemäß der vorliegenden Erfindung; und
- Fig. 3: ein Blockschaltbild einer Ausführungsform der Batterie-Stufe des erfindungsgemäßen Photovoltaik-Wechselrichters.

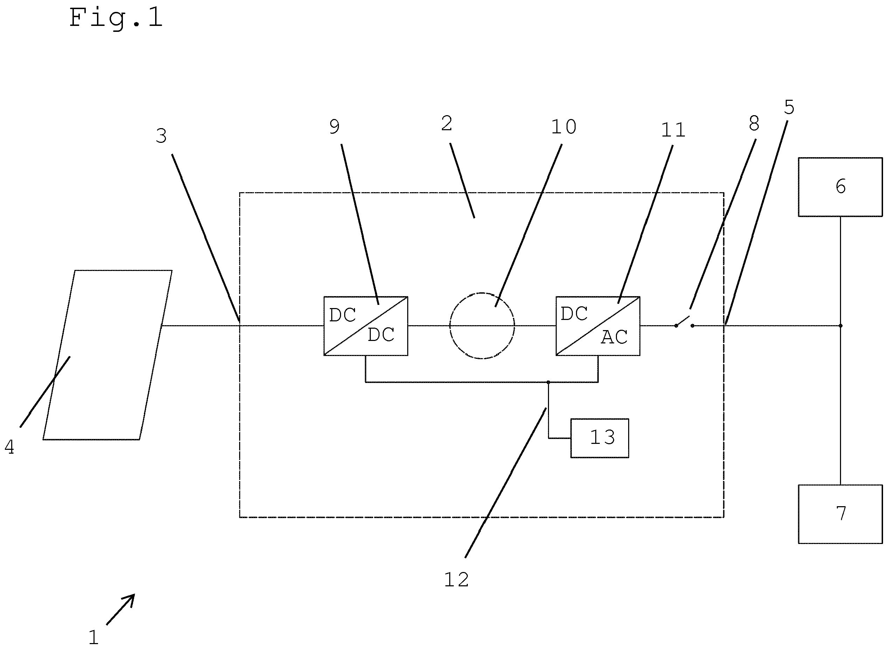

In Fig. 1 ist ein Blockschaltbild einer üblichen Photovoltaikanlage 1 schematisch dargestellt. Die Photovoltaikanlage 1 beinhaltet einen Photovoltaik-Wechselrichter 2, welcher bevorzugt durch einen HF-Wechselrichter gebildet wird. Am Gleichspannungseingang bzw. DC-Eingang 3 des Photovoltaik-Wechselrichters 2 wird die Gleichspannungsquelle bzw. DC-Quelle 4 angeschlossen, welche bevorzugt aus einem oder mehreren parallel und/oder seriell geschalteten Solarmodulen gebildet wird. Der Wechselspannungsausgang bzw. AC-Ausgang 5 des Photovoltaik-Wechselrichters 2 wird mit dem Versorgungsnetz 6 und allenfalls Verbrauchern 7 verbunden. Beispielsweise werden die Verbraucher 7 durch einen Motor, einen Kühlschrank, ein Funkgerät usw. gebildet. Ebenso kann der Verbraucher 7 auch eine Hausversorgung darstellen. Vor dem AC-Ausgang 5 befindet sich ein AC-Trenner 8 im Photovoltaik-Wechselrichter 2, um diesen vom Versorgungsnetz 6 und von den allfälligen Verbrauchern 7 trennen zu können bzw. ein Zuschalten des Photovoltaik-Wechselrichters 2 an das Versorgungsnetz 6 und die Verbraucher 7 nur dann vorzunehmen, wenn ausreichende Energie von der DC-Quelle 4 zur Verfügung gestellt wird. Der Photovoltaik-Wechselrichter 2 weist eingangsseitig einen DC-DC-Wandler 9, einen Zwischenkreis 10 und einen ausgangsseitigen DC-AC-Wandler 11 auf. Die einzelnen Komponenten des Photovoltaik-Wechselrichters 2 sind üblicherweise über einen Datenbus 12 mit einer Steuervorrichtung 13 verbunden. Die Steuervorrichtung 13 ist beispielsweise durch einen Mikroprozessor, einen Mikrocontroller oder einen Rechner gebildet. Über die Steuervorrichtung 13 kann eine entsprechende Steuerung der einzelnen Komponenten, wie dem DC-DC-Wandler 9 oder dem DC-AC-Wandler 11, insbesondere der darin angeordneten Schaltelemente, sowie dem AC-Trenners 8 vorgenommen werden. In der Steuervorrichtung 13 sind hierzu die einzelnen Regel- bzw. Steuerabläufe durch entsprechende Software-Programme und/oder Daten bzw. Kennlinien gespeichert.

Das Energiemanagement eines derartigen sogenannten netzgekoppelten Photovoltaik-Wechselrichters 2 wird dahingehend optimiert, möglichst viel Eigenenergieverbrauch abzudecken oder abhängig von der Vergütung einzuspeisen. Zusätzlich kann das Energiemanagement das Abdecken von Stromspitzen (peak shaving) realisieren. Selbstverständlich können auch mehrere Photovoltaik-Wechselrichter 2 parallel geschaltet werden, wodurch mehr Energie zur Verfügung steht und mehr Leistung zum Betrieb der Verbraucher 7 oder zur Einspeisung in das Versorgungsnetz 6 bereitgestellt werden kann.

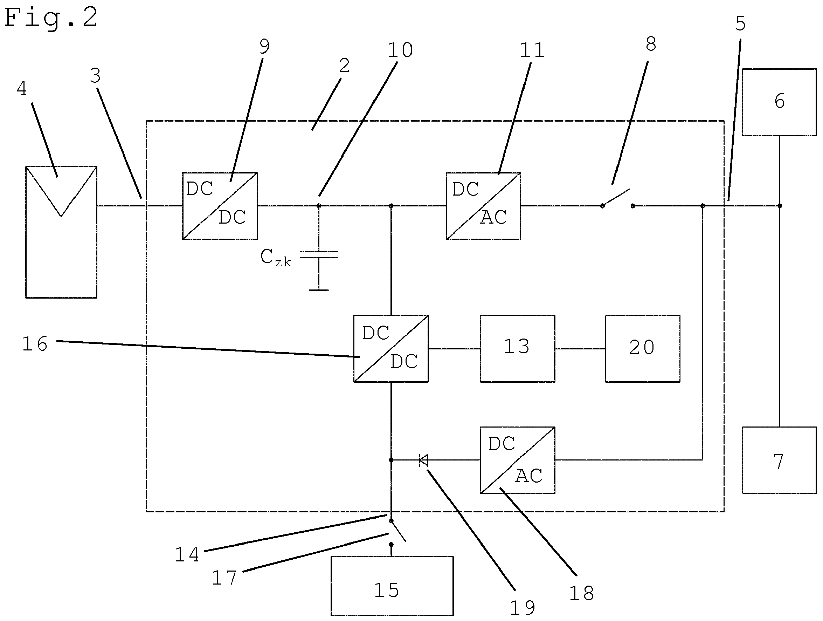

Fig. 2 zeigt ein Blockschaltbild eines erfindungsgemäßen Photovoltaik-Wechselrichters 2, wobei über einen Batterie-Anschluss 14 eine Pufferbatterie 15 angeschlossen werden kann, um zumindest ausgewählte Verbraucher 7 auch dann mit elektrischer Energie versorgen zu können, wenn die DC-Quelle 4 keine Energie liefert, beispielsweise während der Dämmerung, der Nachtstunden, wenn Schnee am Solarmodul liegt, oder wenn das Solarmodul vom Photovolataik-Wechselrichter 2 getrennt wurde (beispielsweise aufgrund von Wartungsarbeiten, Wildbiss oder Diebstahl). Die Pufferbatterie 15 ist über eine Batterie-Stufe 16 mit dem Zwischenkreis 10 mit dem entsprechenden Zwischenkreiskondensator C_{ZK} verbunden. Zwischen Batterie-Anschluss 14 und Pufferbatterie 15 kann ein Batterie-Schalter 17 angeordnet sein, welcher beispielsweise durch ein Relais gebildet ist. Der Batterie-Schalter 17 kann im Photovoltaik-Wechselrichter 2, in der Pufferbatterie 15 oder zwischen Pufferbatterie 15 und Photovoltaik-Wechselrichter 2 angeordnet sein. Wenn der Batterie-Schalter 17 im Photovoltaik-Wechselrichter 2 integriert ist, dann wird das Schaltnetzteil 18 ausgangsseitig mit der Batterie-Stufe 16 anstelle des Batterie-Anschlusses 14 verbunden. Ein derartiger Photovoltaik-Wechselrichter 2 wird auch als Hybrid-Wechselrichter bezeichnet. Wenn der Batterie-Schalter 17 intern im Photovoltaik-Wechselrichter 2 angeordnet ist, befindet sich der Batterie-Anschluss 14 vor dem Batterie-Schalter 17, also zwischen Batterie-Stufe 16 und Batterie-Schalter 17. Der Batterie-Schalter 17 dient auch dazu, dass das Schaltnetzteil 18 nicht von den Komponenten der Pufferbatterie 15 belastet wird.

Erfindungsgemäß ist ein Schaltnetzteil 18 vorgesehen, welches eingangsseitig mit dem AC-Ausgang 5 bzw. Ausgang des AC-DC-Wandlers 11 des Photovoltaik-Wechselrichters 2 verbunden ist. Ausgangsseitig ist das Schaltnetzteil 18 über eine Diode 19, welche einen Stromfluss in Richtung Schaltnetzteil 18 verhindert, mit dem Batterie-Anschluss 14 bzw. Ausgang der Batteriestufe 16 verbunden. Über das Schaltnetzteil 18 wird im Falle einer deaktivierten DC-Quelle 4 der Zwischenkreis 10 über die Batterie-Stufe 16 auf einen Schwellwert aufgeladen, der notwendig ist, um ein Zuschalten des Photovoltaik-Wechselrichters 2 an das Versorgungsnetz 6 und allenfalls an die Verbraucher 7 durch Schließen des AC-Trenners 8 zu ermöglichen.

Die einzelnen Komponenten sind entsprechend mit einer Steuervorrichtung 13 verbunden (nicht dargestellt) und können demnach aktiviert bzw. deaktiviert und/oder entsprechend gesteuert oder geregelt werden. Die Steuervorrichtung 13 umfasst dabei auch ein internes und/oder externes Energiemanagement-System. Ebenso können die Komponenten des Photovoltaik-Wechselrichters 2 und die Steuervorrichtung 13 mit dem Schaltnetzteil 18 verbunden sein und entsprechend mit elektrischer Energie versorgt werden. In diesem Fall könnte ein eigens dafür vorgesehenes Schaltnetzteil zur Versorgung der Komponenten des Photovoltaik-Wechselrichters 2 entfallen.

Die DC-Quelle 4 kann auch ohne DC-DC-Wandler 9 direkt am Zwischenkreis 10 angeschlossen werden. Bei Sonneneinstrahlung liefert die DC-Quelle 4 entsprechende Energie und der Zwischenkreis 10 des Photovoltaik-Wechselrichters 2 wird beispielsweise auf eine Spannung von 600 V geladen. Dies ermöglicht eine Einspeisung von elektrischer Energie in das Versorgungsnetz 6, indem der DC-AC-Wandler 11 entsprechend aktiviert und der AC-Trenner 8, der beispielsweise durch ein Relais gebildet wird, geschlossen wird.

Ebenso kann die Anforderung bestehen, dass auch die Pufferbatterie 15 geladen werden muss. Demnach wird auch die Batterie-Stufe 16 aktiviert, der Batterie-Schalter 17 geschlossen und die Pufferbatterie 15 über den Zwischenkreis 10 geladen. Wenn die Pufferbatterie 15 geladen ist oder die DC-Quelle 4 beispielsweise aufgrund der Dämmerung keine Energie mehr liefert, können die entsprechenden Komponenten auch wieder deaktiviert werden. Mit einer derartigen Photovoltaikanlage 1 kann auch während der Nachtstunden Energie aus der Pufferbatterie 15 entnommen werden, welche über den AC-Ausgang 5 an die Verbraucher 7 geliefert wird.

Ist die Pufferbatterie 15 leer, müssen die Verbraucher 7 entsprechend über das Versorgungsnetz 6 mit elektrischer Energie versorgt werden. Aus diversen Gründen (wie günstiger Strompreis, Unwettergefahr, schlechte Wettervorhersage, ...) kann dabei die Anforderung bestehen, die Pufferbatterie 15 auch bei deaktivierter DC-Quelle 4 über das Versorgungsnetz 6 zu laden.

Dazu muss entsprechend der DC-AC-Wandler 11 aktiviert und der AC-Trenner 8 betätigt bzw. geschlossen werden, wozu die Spannung U_{ZK} des Zwischenkreises 10 auf einen entsprechenden Schwellwert geladen sein muss. In solchen Fällen, bei welchen die DC-Quelle 4 deaktiviert ist, muss also der Zwischenkreis 10 zuerst geladen werden, um ein Zuschalten des Photovoltaik-Wechselrichters 2 an das Versorgungsnetz 6 durch Schließen des AC-Trenners 8 zu ermöglichen. Erfindungsgemäß erfolgt dies über die Batterie-Stufe 16, welche über das Schaltnetzteil 18 vom AC-Ausgang 5 des Photovoltaik-Wechselrichters 2 versorgt wird.

Ist die Pufferbatterie 15 entladen, wird der Batterie-Schalter 17 geöffnet, also die Pufferbatterie 15 vom Photovoltaik-Wechselrichter 2 getrennt.

Nachdem das Schaltnetzteil 18 nur eine begrenzte Leistung/Spannung zur Verfügung stellen kann, wird diese von der Batterie-Stufe 16, welche vorzugsweise als bidirektionaler DC-DC-Wandler, insbesondere als Hochsetzsteller oder Booster ausgebildet ist, entsprechend hochgeladen. Dabei wird auch berücksichtigt, dass das Schaltnetzteil 18 nicht überlastet wird und der Batterie-Schalter 17 geöffnet ist. Zur Vermeidung einer Überlastung des Schaltnetzteils 18 wird die Batterie-Stufe 16 beim Hochladen der Zwischenkreisspannung U_{ZK} entsprechend angesteuert. Zu diesem Zweck ist die Batterie-Stufe 16 mit der Steuervorrichtung 13 des Photovoltaik-Wechselrichters 2 verbunden. Die entsprechenden Steuerungsvorschriften können in einem mit der Steuervorrichtung 13 verbundenen Programmspeicher 20 abgelegt sein.

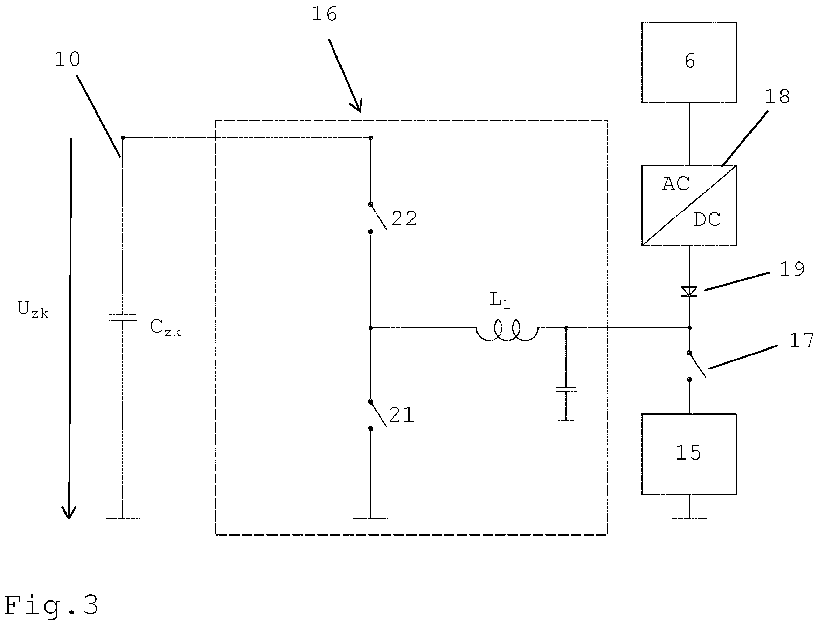

Die Batterie-Stufe 16 ist beispielsweise entsprechend Fig. 3 als Hochsetzsteller mit Synchrongleichrichtung ausgebildet. Die Ansteuerung der Halbleiter-Schalter, des Lowside-Schalters 21 und Highside-Schalters 22 erfolgt über ein Tastverhältnis D(t). Dabei wird der Lowside-Schalter 21 mit dem Tastverhältnis D(t) und der Highside-Schalter 22 mit dem invertierten Tastverhältnis 1-D(t) angesteuert. Damit der vom Schaltnetzteil 18 gelieferte Strom I über die Induktivität L1 im Mittel gleich bleibt, wird das Tastverhältnis D(t) entsprechend gesteuert.

Das Tastverhältnis D(t) wird dabei so gewählt, dass eine im Wesentlichen konstante und akzeptable (in Bezug auf die Überlastung des Schaltnetzteils 18) Leistung/Energie vom Schaltnetzteil 18 entnommen wird - beispielsweise einige Watt (3W). Um dies zu gewährleisten, muss die Energie bzw. Spannung U_{ZK} im Zwischenkreis 10 von einem vorhandenen Anfangswert der Zwischenkreisspannung U_{ZK}, dem Startwert, bis zum gewünschten Endwert, beispielsweise der Netzscheitelspannung nach einer vorgegebenen Funktion ansteigen. Beispielsweise errechnet sich das Tastverhältnis mit D(t) = 1 - (U_{SNT}/U_{ZK,soll} (t)), wobei USNT die Ausgangsspannung des Schaltnetzteils 18 bzw. die Spannung am Zwischenkreis 10 zu Beginn des Hochladens, und U_{ZK,soll}(t) den zeitabhängigen Zielwert der Zwischenkreisspannung darstellen. Die Zwischenkreisspannung U_{ZK}(t) in Abhängigkeit der Zeit t steigt nach einer Wurzelfunktion, gemäß der der Spannungsanstieg zu Beginn stärker ausgebildet ist und mit zunehmender Zeit flacher ansteigt. Je länger also der Zwischenkreis 10 geladen wird, desto mehr verringert sich der in den Zwischenkreis 10 fließende Strom.

Im ersten Schritt wird also zur Ermittlung des Tastverhältnisses D(t) der Ist-Wert der Zwischenkreisspannung U_{ZK} gemessen und als Startwert definiert. Dadurch ist die Anfangsenergie des Zwischenkreises 10 bekannt. Die Ausgangsspannung U_{SNT} des Schaltnetzteils 18 ist konstant und liegt beispielsweise bei 130V.

Nachdem nur konstante Leistung aus dem Schaltnetzteil 18 entnommen wird, steigt die Energie/Spannung des Zwischenkreises 10 gemäß Anfangsenergie plus zugeführte Energie. Beispielsweise beträgt die Abtastrate 1ms (1kHz), sodass entsprechend zyklisch jede ms Energie zugeführt wird. Gemäß dieser zugeführten Energie ergibt sich eine Erhöhung der Zwischenkreisspannung U_{ZK}. Da die zugeführte Energie konstant ist, wird die Zwischenkreisspannung U_{ZK} ermittelt und muss nicht laufend gemessen werden. Das Tastverhältnis D(t) wird gemäß obiger Formel laufend ermittelt, beispielsweise jede ms und die Halbleiter-Schalter 21 und 22 der Batterie-Stufe 16 entsprechend angesteuert. Die gewünschte Zwischenkreisspannung U_{ZK}(t), welche zumindest der Netzscheitelspannung bzw. der Außenleiterscheitelspannung entspricht und von der Topologie des Photovoltaik-Wechselrichters 2 abhängt, ist demnach nach kurzer Zeit, beispielsweise wenigen Minuten (z.B. 2min) erreicht. Danach kann der AC-Trenner 8 geschlossen und der DC-AC-Wandler 11 aktiviert werden, sodass die Pufferbatterie 15 vom Versorgungsnetz 6 über den Zwischenkreis 10 geladen wird.

Der vorliegende Photovoltaik-Wechselrichter 2 und das Verfahren zum Betreiben desselben ermöglicht eine Zuschaltung an das Versorgungsnetz 6 bzw. die Verbraucher 7 auch dann, wenn die DC-Quelle 4 keine Energie liefert, sodass die Pufferbatterie 15 über das Versorgungsnetz 6 geladen werden kann oder von der Pufferbatterie 15 Energie in das Versorgungsnetz 6 eingespeist werden kann. Ebenso kann vom Photovoltaik-Wechselrichter 2 Blindleistung kompensiert werden. Der Aufwand für diese das Energiemanagement verbessernde Funktion ist besonders gering, da bereits vorhandene Komponenten des Photovoltaik-Wechselrichters 2 verwendet werden.

## Patentansprüche

1. Photovoltaik-Wechselrichter (2) mit einem DC-Eingang (3) zur Verbindung mit einer DC-Quelle (4), einem DC-DC-Wandler (9), einem Zwischenkreis (10), einem DC-AC-Wandler (11), einem AC-Trenner (8), einem AC-Anschluss (5) zur Verbindung mit einem Versorgungsnetz (6) und allenfalls einem Verbraucher (7), einer Batterie-Stufe (16), und einem Batterie-Anschluss (14) zur Verbindung mit einer Pufferbatterie (15), **dadurch gekennzeichnet, dass** ein Schaltnetzteil (18) vorgesehen ist, welches Schaltnetzteil (18) eingangsseitig mit dem AC-Anschluss (5) und ausgangsseitig mit dem Batterie-Anschluss (14) verbunden ist, sodass bei deaktivierter DC-Quelle (4) der Zwischenkreis (10) über das Schaltnetzteil (18) und die Batterie-Stufe (16) auf einen Schwellwert aufladbar ist, worauf der AC-Trenner (8) betätigbar ist.

2. Photovoltaik-Wechselrichter (2) nach Anspruch 1, **dadurch gekennzeichnet, dass** ausgangsseitig des Schaltnetzteils (18) eine Diode (19) angeordnet ist.

3. Photovoltaik-Wechselrichter (2) nach Anspruch 1 oder 2, **dadurch gekennzeichnet, dass** ein Batterie-Schalter (17) zum Zu- und Wegschalten der Pufferbatterie (15) vorgesehen ist.

4. Photovoltaik-Wechselrichter (2) nach einem der Ansprüche 1 bis 3, **dadurch gekennzeichnet, dass** eine Steuervorrichtung (13) vorgesehen ist.

5. Photovoltaik-Wechselrichter (2) nach einem der Ansprüche 1 bis 4, **dadurch gekennzeichnet, dass** die Batterie-Stufe (16) durch einen bidirektionalen DC-DC-Wandler gebildet ist.

6. Photovoltaik-Wechselrichter (2) nach Anspruch 5, **dadurch gekennzeichnet, dass** die Batterie-Stufe (16) durch einen Hochsetzsteller mit Synchrongleichrichtung mit zwei Halbleiterschaltern (21, 22) gebildet ist.

7. Photovoltaik-Wechselrichter (2) nach Anspruch 6, **dadurch gekennzeichnet, dass** die Batterie-Stufe (16) mit der Steuervorrichtung (13) verbunden ist, welche zur Ladung des Zwischenkreises (10) mit im Wesentlichen konstanter Leistungsentnahme aus dem Schaltnetzteil (18) ausgebildet ist, indem die Halbleiterschalter (21, 22) des Hochsetzstellers mit einem vorgegebenen Tastverhältnis (D(t)) ansteuerbar sind.

8. Photovoltaik-Wechselrichter (2) nach Anspruch 7, **dadurch gekennzeichnet, dass** die Steuervorrichtung (13) mit einem Programmspeicher (20) verbunden ist.

9. Verfahren zum Betreiben eines Photovoltaik-Wechselrichters (2), wobei der Photovoltaik-Wechselrichter (2) einen DC-Eingang (3) zur Verbindung mit einer DC-Quelle (4), einen DC-DC-Wandler (9), einen Zwischenkreis (10), einen DC-AC-Wandler (11), einen AC-Trenner (8), einen AC-Anschluss (5) zur Verbindung mit einem Versorgungsnetz (6) und allenfalls einem Verbraucher (7), eine Batterie-Stufe (16), und einen Batterie-Anschluss (14) zur Verbindung mit einer Pufferbatterie (15) aufweist, **dadurch gekennzeichnet, dass** ein Schaltnetzteil (18) vom AC-Anschluss (5) versorgt wird und bei deaktivierter DC-Quelle (4) zum Laden des Zwischenkreises (10) über die Batterie-Stufe (16) auf einen Schwellwert verwendet wird, worauf der AC-Trenner (8) betätigt wird.

10. Verfahren nach Anspruch 9, **dadurch gekennzeichnet, dass** die Pufferbatterie (15) über einen Batterie-Schalter (17) zu- und weggeschaltet wird.

11. Verfahren nach Anspruch 9 oder 10, **dadurch gekennzeichnet, dass** der Zwischenkreis (10) über das Schaltnetzteil (18) mit konstanter Leistung geladen wird, indem die Batterie-Stufe (16) durch einen bidirektionalen DC-DC-Wandler, insbesondere Hochsetzsteller mit Synchrongleichrichtung mit zwei Halbleiterschaltern (21, 22) gebildet wird, welche Halbleiterschalter (21, 22) über ein entsprechendes Tastverhältnis (D(t)) angesteuert werden.

12. Verfahren nach Anspruch 11, **dadurch gekennzeichnet, dass** vor dem Laden des Zwischenkreises (10) über das Schaltnetzteil (18) die Spannung (U_{ZK}) am Zwischenkreis (10) gemessen und als Startspannung herangezogen wird, und das Tastverhältnis (D(t)) in Abhängigkeit der Startspannung ermittelt wird.

13. Verfahren nach einem der Ansprüche 9 bis 12, **dadurch gekennzeichnet, dass** der AC-Trenner (8) betätigt wird, wenn der Schwellwert der Spannung (U_{ZK}) des Zwischenkreises (10) mindestens der Netzscheitelspannung des Versorgungsnetzes (6) entspricht.
